# EUROPEAN PATENT APPLICATION

(11) **EP 4 484 764 A1**
(43) Date of publication of application: **01.01.2025**
(21) Application number: 24165552.1
(22) Date of filing: 22.03.2024
(51) Int. Cl.: F16B 2/06, F16B 5/06, B65G 39/00

(54) **AXLE SECURING DEVICE**

(30) Priority: 27.06.2023 US 202363523622 P; 29.11.2023 US 202318522253
(71) Applicant: Bamboo Dynamics Corporation., Ltd., Jubei, Hsinchu 302058 (TW)
(72) Inventor: CHAN, Yuan Chen, 302058 Jubei, Hsinchu (TW); YANG, Han-Ping, 310015 Zhudong Township, Hsinchu County (TW)
(74) Representative: Becker, Eberhard

(57) **Abstract**

An axle securing device (100A, 100B) for securing a polygonal axle (120) and a roller secured thereto is provided. The axle securing device (100A, 100B) includes a bracket (110), an elastic buckle (130), and a first bolt (140). The bracket (110) includes a clamping part (111) for clamping the polygonal axle (120), a securing part (113), and two elongated arms (112) connected between the clamping part (111) and the securing part (113). The first bolt (140) is inserted through the elastic buckle (130) and the securing part (113) to secure the elastic buckle (130) on the bracket (110). The two elongated arms (112) are held between two elastic arms (132) of the elastic buckle (130), wherein the clamping part (111) is driven by the two elastic arms (132) to constrict inwardly and thus restricting a movement of the polygonal axle (120). Another axle securing device (100B, 100C) is also provided.

## Description

### BACKGROUND

### Technical Field

The disclosure relates to an axle securing device, and in particular to an axle securing device for a roller of a conveyor.

### Description of Related Art

An axle is an essential part for fastening a rotating roller to stationary portions of a conveyor, and bears all loads coming from items which are conveyed on the roller. Excess load applied on the axle may cause wearing of the axle, and may even cause breaking of the axle. Therefore, how to secure the axle as well as protect the axle against overload and thus preventing the axle from being damaged has been an issue that receives attention of relevant manufacturers.

### SUMMARY

The disclosure provides an axle securing device, which helps to prevent the axle from being damaged.

According to an embodiment of the disclosure, an axle securing device is adapted to secure a polygonal axle and a roller secured thereto. The axle securing device includes a bracket, an elastic buckle, and a first bolt. The bracket includes a clamping part, two elongated arms and a securing part, wherein the two elongated arms are spaced apart from each other and respectively connected to two opposite ends of the clamping part. The two elongated arms are respectively located at two opposite sides of the securing part and connected to two opposite ends of the securing part, wherein the clamping part has a polygonal hole and the securing part has a first securing hole. Two slits are provided between the two elongated arms and the securing part, wherein the two slits are connected to each other and connected to the polygonal hole. The polygonal axle is inserted through the polygonal hole and clamped by the clamping part. The elastic buckle is attached to the two elongated arms and the securing part, wherein the elastic buckle includes a mounting part having a mounting hole aligned with the first securing hole and two elastic arms respectively connected to two opposite sides of the mounting part. The two elastic arms respectively contact the two elongated arms, wherein the two elongated arms are held between the two elastic arms and the two elastic arms respectively apply clamping forces towards the first securing hole to the two elongated arms, the clamping part is driven by the two elongated arms to constrict inwardly and thus restricting a movement of the polygonal axle. The first bolt is inserted through mounting hole and the first securing hole to secure the elastic buckle on the bracket.

In the axle securing device according to an embodiment of the disclosure, the polygonal hole is a hexagonal hole and the polygonal axle is a hexagonal axle.

In the axle securing device according to an embodiment of the disclosure, the clamping part has a notch connected to the hexagonal hole and a trench opposite to the notch, and the hexagonal hole is connected to the two slits through the trench.

In the axle securing device according to an embodiment of the disclosure, one corner of the hexagonal axle is inserted into the notch and another one corner of the hexagonal axle is inserted into the trench.

In the axle securing device according to an embodiment of the disclosure, one side surface of the hexagonal axle covers the notch and another one side surface of the hexagonal axle covers the trench.

In the axle securing device according to an embodiment of the disclosure, the two elongated arms are symmetrically disposed at the two opposite sides of the securing part and the two slits are symmetrically disposed at the two opposite sides of the securing part.

In the axle securing device according to an embodiment of the disclosure, the securing part further has two second securing holes respectively located at the two opposite ends of the securing part to which the two elongated arms connected, and the first securing hole is located between the polygonal hole and the two second securing holes. The axle securing device further comprises two second bolts, and the two second bolts are respectively inserted through the two second securing holes.

According to another embodiment of the disclosure, an axle securing device is adapted to secure a polygonal axle and a roller secured thereto. The axle securing device includes a bracket, an elastic buckle, and a first bolt. The bracket includes a clamping part, an elongated arm and a securing part, wherein the elongated arm is connected to one end of the clamping part and the securing part is connected to another end of the clamping part. The clamping part has a polygonal hole, wherein the elongated arm is spaced apart from the securing part and a slit is provided between the elongated arm and the securing part. The slit is connected to the polygonal hole and the securing part has a first securing hole. The polygonal axle is inserted through the polygonal hole and clamped by the clamping part. The elastic buckle is attached to the elongated arm and the securing part, wherein the elastic buckle includes a mounting part having a mounting hole aligned with the first securing hole and two elastic arms respectively connected to two opposite sides of the mounting part. The two elastic arms respectively contact the elongated arm and the securing part, wherein the elongated arm and the securing part are held between the two elastic arms and the two elastic arms respectively apply clamping forces towards the first securing hole to the elongated arm and the securing part. The clamping part is driven by the elongated arm and the securing part to constrict inwardly and thus restricting a movement of the polygonal axle. The first bolt is inserted through mounting hole and the first securing hole to secure the elastic buckle on the bracket.

In the axle securing device according to another embodiment of the disclosure, the clamping part has a notch connected to the hexagonal hole and a trench opposite to the notch, and the hexagonal hole is connected to the slit through the trench.

In the axle securing device according to another embodiment of the disclosure, the elongated arm has one end connected to the clamping part and another end spaced apart from the securing part, and an aperture is formed between the another end of the elongated arm and the securing part.

In the axle securing device according to another embodiment of the disclosure, the securing part further has two second securing holes distal from the polygonal hole and the first securing hole is located between the polygonal hole and the two second securing holes, wherein the axle securing device further comprises two second bolts, and the two second bolts are respectively inserted through the two second securing holes.

Based on the foregoing, in the axle securing device according to the embodiments of the disclosure, the bracket and the elastic buckle are able to generate elastic deformation to absorb or buffer the impact force applied on the polygonal axle, and thus preventing the polygonal axle from being damaged.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a schematic view of an axle securing device according to an embodiment of the disclosure.
FIG. 1B is a schematic exploded view of the axle securing device of FIG. 1A.
FIG. 1C is a schematic front view of the axle securing device of FIG. 1A.
FIG. 2 is a schematic front view of an axle securing device according to another embodiment of the disclosure.
FIG. 3A is a schematic view of an axle securing device according to still another embodiment of the disclosure.
FIG. 3B is a schematic exploded view of the axle securing device of FIG. 3A.
FIG. 3C is a schematic front view of the axle securing device of FIG. 3A.
FIG. 4 is a schematic front view of an axle securing device according to yet another embodiment of the disclosure.

### DESCRIPTION OF THE EMBODIMENTS

Reference will now be made in detail to exemplary embodiments of the disclosure, examples of which are illustrated in the accompanying drawings. Wherever possible, the same reference numerals are used in the drawings and description to denote the same or similar parts.

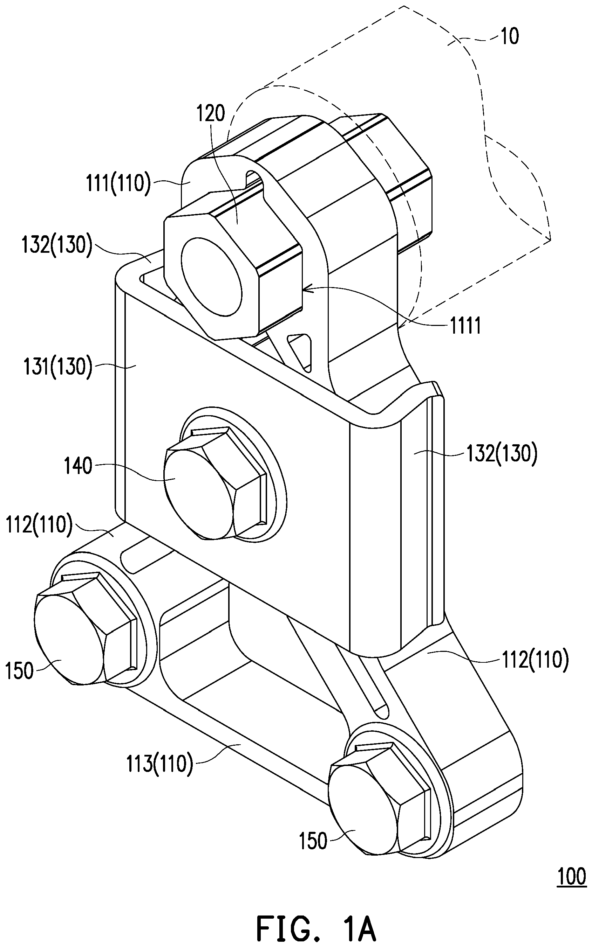

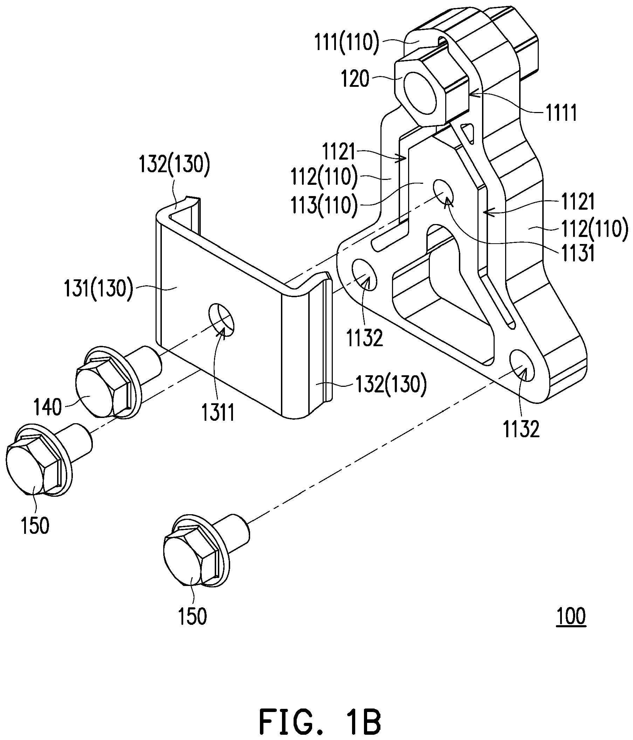

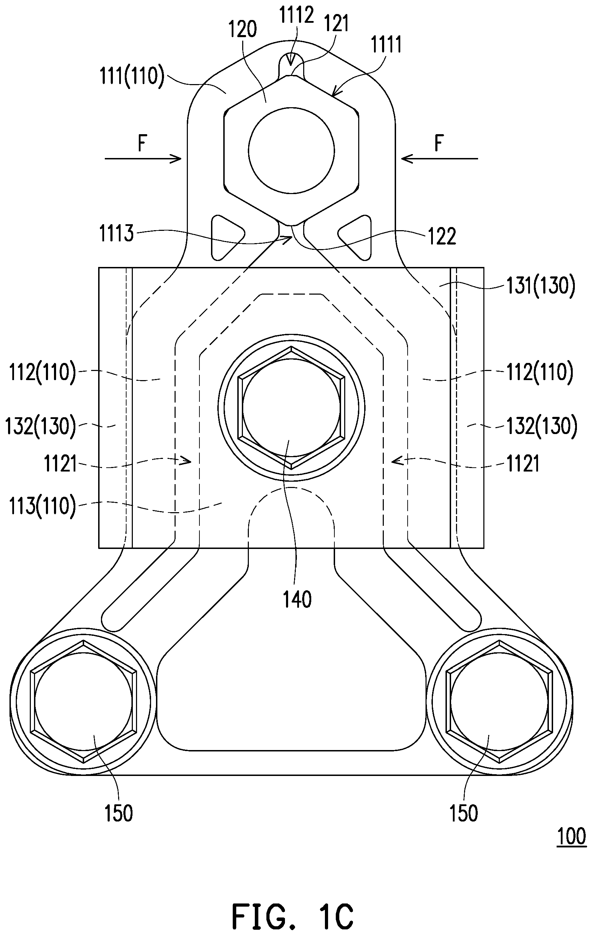

FIG. 1A is a schematic view of an axle securing device according to an embodiment of the disclosure. FIG. 1B is a schematic exploded view of the axle securing device of FIG. 1A. FIG. 1C is a schematic front view of the axle securing device of FIG. 1A. With reference to FIG. 1A, in this embodiment, an axle securing device 100 is adapted to be secured to a frame of a conveyor, wherein a roller 10 of the conveyor is adapted to be secured to a polygonal axle 120 and the polygonal axle 120 is adapted to be secured to the axle securing device 100.

With reference to FIG. 1A to FIG. 1C, the axle securing device 100 includes a bracket 110, an elastic buckle 130, and a first bolt 140. The bracket 110 is adapted to be secured to the frame of the conveyor and clamps the polygonal axle 120. In addition, the elastic buckle 130 is secured on the bracket 110 through the first bolt 140 and clamps the bracket 110. In detail, the polygonal axle 120 is clamped by the bracket 110 and the elastic buckle 130 secured on the bracket 110 applies two clamping forces F inwardly to the bracket 110 to restrict the movement of the polygonal axle 120, and thus preventing the polygonal axle 120 from being detached from the bracket 110 accidentally and enhancing the operating reliability and stability of the roller 10. Besides, the bracket 110 and the elastic buckle 130 are able to generate elastic deformation to absorb or buffer the impact force applied on the polygonal axle 120, and thus preventing the polygonal axle 120 from being damaged.

In this embodiment, the bracket 110 includes a clamping part 111, two elongated arms 112 and a securing part 113, wherein the two elongated arms 112 are connected between the clamping part 111 and the securing part 113 and the two elongated arms 112 are spaced apart from each other. In detail, the two elongated arms 112 are respectively connected to two opposite ends of the clamping part 111 and are respectively connected to two opposite ends of the securing part 113. The two elongated arms 112 are respectively located at two opposite sides of the securing part 113, and two slits 1121 are provided between the two elongated arms 112 and the securing part 113. That is to say, two opposite ends of each elongated arm 112 are respectively connected to the clamping part 111 and the securing part 113, and each elongated arm 112 is spaced apart from the securing part 113 by the corresponding slit 1121.

As shown in FIG. 1B and FIG. 1C, the two elongated arms 112 are symmetrically disposed at the two opposite sides of the securing part 113 and the two slits 1121 are also symmetrically disposed at the two opposite sides of the securing part 113.

In this embodiment, the clamping part 111 has a polygonal hole 1111 and the securing part 113 has a first securing hole 1131, wherein the two slits 1121 are connected to each other and connected to the polygonal hole 1111. In detail, the polygonal axle 120 is inserted through the polygonal hole 1111 and clamped by the clamping part 111. For example, the polygonal hole 1111 may be a hexagonal hole and the polygonal axle 120 may a hexagonal axle. Due to the matching of the outer profile of the hexagonal axle and the inner profile of the hexagonal hole, the hexagonal axle is unable to rotate in the hexagonal hole.

In some exemplary embodiments, the polygonal axle may be a triangle axle, a rectangle axle, a pentagon axle, a heptagon axle, an octagon axle, and so on. Due to the matching of the outer profile of the polygonal axle and the inner profile of the polygonal hole, the polygonal hole may be a triangle hole, a rectangle hole, a pentagon hole, a heptagon hole, an octagon hole, and so on.

As shown in FIG. 1A to FIG. 1C, the elastic buckle 130 is attached to the two elongated arms 112 and the securing part 113, wherein the elastic buckle 130 includes a mounting part 131 having a mounting hole 1311 aligned with the first securing hole 1131 and two elastic arms 132 respectively connected to two opposite sides of the mounting part 131. For example, the elastic buckle 130 may be a U-shaped buckle, and the two elastic arms 132 are symmetrically disposed.

In detail, the two elastic arms 132 respectively contact the two elongated arms 112, wherein the two elongated arms 112 are held between the two elastic arms 132 and the two elastic arms 132 respectively apply clamping forces F towards the first securing hole 1131 to the two elongated arms 112. Hence, the clamping part 111 is driven by the two elongated arms 112 to constrict inwardly to clamp the polygonal axle 120 and thus restricting a movement of the polygonal axle 120.

In this embodiment, the first bolt 140 is inserted through mounting hole 1311 and the first securing hole 1131 to secure the elastic buckle 130 on the bracket 110 or secure the mounting part 131 on the securing part 113. In detail, the first bolt 140 is screwed with the first securing hole 1131 of the securing part 113. On the other hand, the securing part 113 further has two second securing holes 1132 respectively located at the two opposite ends of the securing part 113 to which the two elongated arms 112 connected. The two second securing holes 1132 is distal from the polygonal hole 1111, wherein the first securing hole 1131 is located between the polygonal hole 1111 and the two second securing holes 1132. Further, the axle securing device 100 further comprises two second bolts 150, and the two second bolts 150 are respectively inserted through the two second securing hole 1132 to secure the bracket 110 to the frame of the conveyor. In detail, two second bolts 150 are screwed with the frame of the conveyor.

In some exemplary embodiments, the elastic buckle 130 may be made of metal, alloy, rubber, or plastic. Regarding the design requirement for long service life, the elastic buckle 130 may be made of metal or alloy which has low hardness, and increase the width and the thickness of the elastic buckle 130, and thus the elastic buckle 130 has high toughness. Regarding the design requirement for maximum force protection, the elastic buckle 130 may be made of metal or alloy which has high hardness, and decrease the width and the thickness of the elastic buckle 130, and thus the elastic buckle 130 has low toughness or high brittleness. Once the roller 10 and the polygonal axle 120 bear excessive impact force, the elastic buckle 130 is able to be broken to remove the clamping forces F applied to the bracket 110 or remove the restriction of the bracket 110 to the polygonal axle 120. Hence, once the roller 10 and the polygonal axle 120 bear excessive impact force and the elastic buckle 130 is broken, the polygonal axle 120 is able to release from the bracket 110, and thus preventing the roller 10 and the polygonal axle 120 from being damaged. Regarding the design requirement for shock absorption, the elastic buckle 130 may be made of metal or alloy and covered by rubber or made of rubber or plastic.

As shown in FIG. 1B and FIG. 1C, the clamping part 111 has a notch 1112 connected to the polygonal hole 1111 and a trench 1113 opposite to the notch 1112, and the polygonal hole 1111 is connected to the two slits 1121 through the trench 1113. In this embodiment, the polygonal hole 1111 may be a hexagonal hole and two opposite corners of the inner profile of the hexagonal hole are respectively connected to the notch 1112 and the trench 1113. Correspondingly, the polygonal axle 120 may be a hexagonal axle having an outer profile matched with the inner profile of the hexagonal hole. In detail, one corner 121 of the polygonal axle 120 face towards or is inserted into the notch 1112 and another one corner 122 of the polygonal axle 120 face towards or is inserted into the trench 1113.

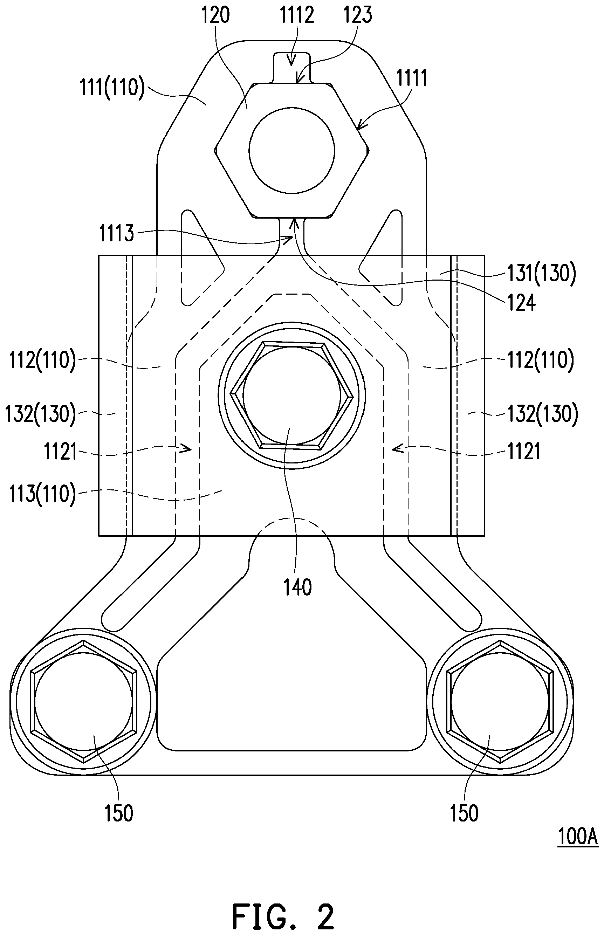

FIG. 2 is a schematic front view of an axle securing device according to another embodiment of the disclosure. As shown FIG. 2, the axle securing device 100A of the present embodiment is similar to the axle securing device 100 of the previous embodiment, and the present embodiment differs to the previous embodiment mainly in that the polygonal hole 1111 of the present embodiment may be a hexagonal hole and two opposite sides of the inner profile of the hexagonal hole are respectively connected to the notch 1112 and the trench 1113. Correspondingly, the polygonal axle 120 may be a hexagonal axle having an outer profile matched with the inner profile of the hexagonal hole. In detail, one side surface 123 of the polygonal axle 120 face towards and covers the notch 1112 and another one side surface 124 of the polygonal axle 120 face towards and covers the trench 1113.

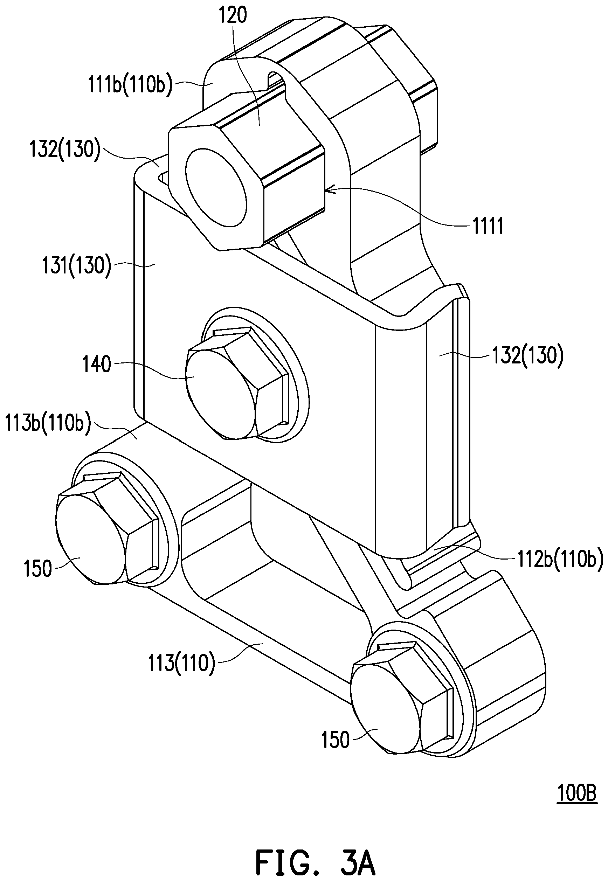

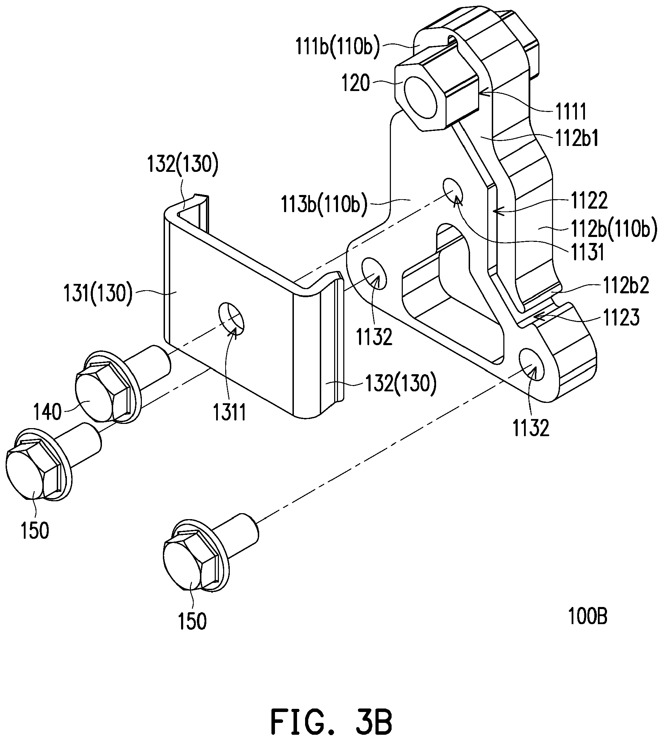

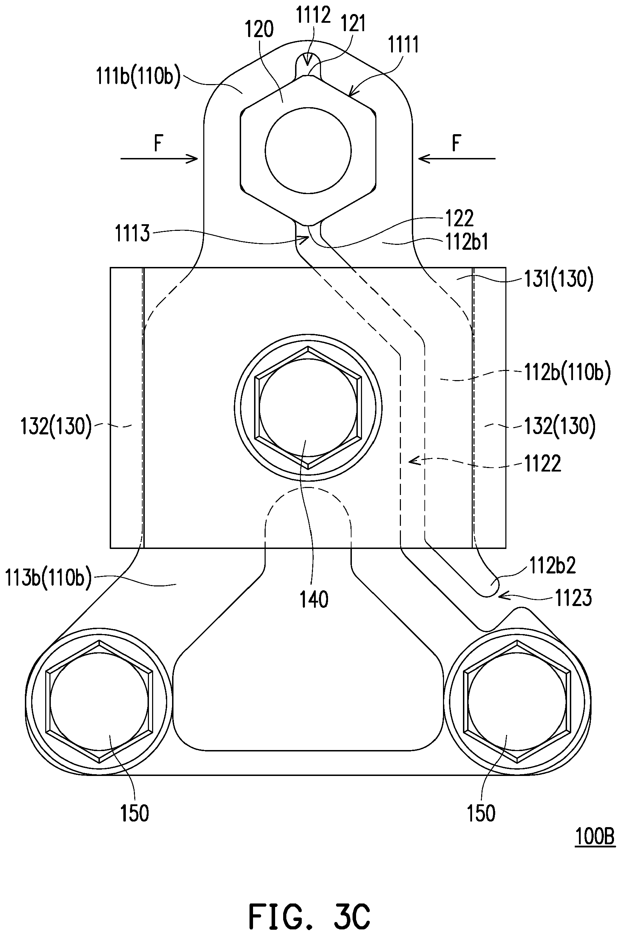

FIG. 3A is a schematic view of an axle securing device according to still another embodiment of the disclosure. FIG. 3B is a schematic exploded view of the axle securing device of FIG. 3A. FIG. 3C is a schematic front view of the axle securing device of FIG. 3A. With reference to FIG. 3A to FIG. 3C, the axle securing device 100B of the present embodiment is similar to the axle securing device 100 of the previous embodiment, and the present embodiment differs to the previous embodiment mainly in that the bracket 110b of the present embodiment includes single elongated arm 112b.

In detail, the elongated arm 112b is connected to one end of the clamping part 111b and the securing part 113b is connected to another end of the clamping part 111b. The elongated arm 112b is spaced apart from the securing part 113b and a slit 1122 connected to the polygonal hole 1111 is provided between the elongated arm 112b and the securing part 113b. In addition, the elastic buckle 130 is attached to the elongated arm 112b and the securing part 113b, wherein the two elastic arms 132 respectively contact the elongated arm 112b and the securing part 113b, and the elongated arm 112b and the securing part 113b are held between the two elastic arms 132. In detail, the two elastic arms 132 respectively apply clamping forces F towards the first securing hole 1131 to the elongated arm 112b and the securing part 113b. Hence, the clamping part 111b is driven by the elongated arm 112b and the securing part 113b to constrict inwardly to clamp the polygonal axle 120 and thus restricting a movement of the polygonal axle 120.

As shown in FIG. 3B and FIG. 3C, the elongated arm 112b has one end 112b1 connected to the clamping part 111b and another end 112b2 spaced apart from the securing part 113b, and an aperture 1123 connected to an exterior is formed between the another end 112b2 of the elongated arm 112b and the securing part 113b.

As shown in FIG. 3B and FIG. 3C, the clamping part 111b has a notch 1112 connected to the polygonal hole 1111 and a trench 1113 opposite to the notch 1112, and the polygonal hole 1111 is connected to the slit 1122 through the trench 1113. In this embodiment, the polygonal hole 1111 may be a hexagonal hole and two opposite corners of the inner profile of the hexagonal hole are respectively connected to the notch 1112 and the trench 1113. Correspondingly, the polygonal axle 120 may be a hexagonal axle having an outer profile matched with the inner profile of the hexagonal hole. In detail, one corner 121 of the polygonal axle 120 face towards or is inserted into the notch 1112 and another one corner 122 of the polygonal axle 120 face towards or is inserted into the trench 1113.

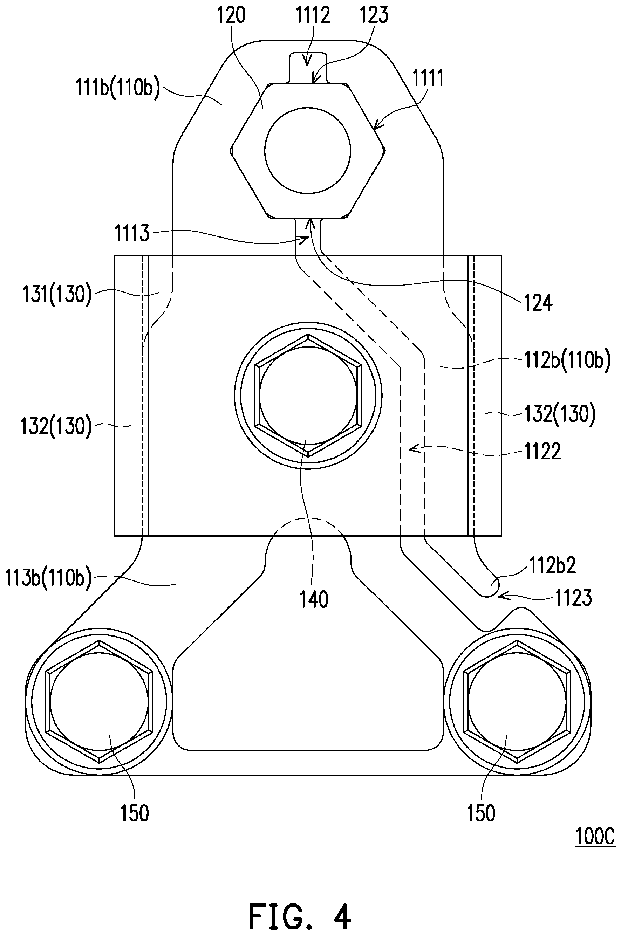

FIG. 4 is a schematic front view of an axle securing device according to yet another embodiment of the disclosure. As shown FIG. 4, the axle securing device 100C of the present embodiment is similar to the axle securing device 100B of the previous embodiment, and the present embodiment differs to the previous embodiment mainly in that the polygonal hole 1111 of the present embodiment may be a hexagonal hole and two opposite sides of the inner profile of the hexagonal hole are respectively connected to the notch 1112 and the trench 1113. Correspondingly, the polygonal axle 120 may be a hexagonal axle having an outer profile matched with the inner profile of the hexagonal hole. In detail, one side surface 123 of the polygonal axle 120 face towards and covers the notch 1112 and another one side surface 124 of the polygonal axle 120 face towards and covers the trench 1113.

In summary of the foregoing, in the axle securing device according to the embodiments of the disclosure, the polygonal axle is clamped by the bracket and the elastic buckle secured on the bracket applies clamping force to the bracket to restrict the movement of the polygonal axle, and thus preventing the polygonal axle from being detached from the bracket accidentally and enhancing the operating reliability and stability of the roller secured to the polygonal axle. In addition, the bracket and the elastic buckle are able to generate elastic deformation to absorb or buffer the impact force applied on the polygonal axle, and thus preventing the polygonal axle from being damaged.

## Claims

1. An axle securing device (100, 100A) for securing a polygonal axle (120) and a roller secured thereto, **characterized by** comprising:
a bracket (110) comprising a clamping part (111), two elongated arms (112) and a securing part (113), wherein the two elongated arms (112) are spaced apart from each other and respectively connected to two opposite ends of the clamping part (111), the two elongated arms (112) are respectively located at two opposite sides of the securing part (113) and connected to two opposite ends of the securing part (113), wherein the clamping part (111) has a polygonal hole (1111) and the securing part (113) has a first securing hole (1131), two slits (1121) are provided between the two elongated arms (112) and the securing part (113), wherein the two slits (1121) are connected to each other and connected to the polygonal hole (1111), wherein the polygonal axle (120) is inserted through the polygonal hole (1111) and clamped by the clamping part (111);
an elastic buckle (130) attached to the two elongated arms (112) and the securing part (113), wherein the elastic buckle (130) comprises a mounting part (131) having a mounting hole (1311) aligned with the first securing hole (1131) and two elastic arms (132) respectively connected to two opposite sides of the mounting part (131), the two elastic arms (132) respectively contact the two elongated arms (112), wherein the two elongated arms (112) are held between the two elastic arms (132) and the two elastic arms (132) respectively apply clamping forces (F) towards the first securing hole (1131) to the two elongated arms (112), the clamping part (111) is driven by the two elongated arms (112) to constrict inwardly and thus restricting a movement of the polygonal axle (120); and
a first bolt (140) inserted through the mounting hole (1311) and the first securing hole (1131) to secure the elastic buckle (130) on the bracket (110).

2. The axle securing device (100, 100A) according to claim 1, **characterized in that** the polygonal hole (1111) is a hexagonal hole and the polygonal axle (120) is a hexagonal axle.

3. The axle securing device (100, 100A) according to claim 2, **characterized in that** the clamping part (111) has a notch (1112) connected to the hexagonal hole and a trench (1113) opposite to the notch (1112), and the hexagonal hole is connected to the two slits (1121) through the trench (1113).

4. The axle securing device (100) according to claim 3, **characterized in that** one corner (121) of the hexagonal axle is inserted into the notch (1112) and another one corner (122) of the hexagonal axle is inserted into the trench (1113).

5. The axle securing device (100A) according to claim 3, **characterized in that** one side surface (123) of the hexagonal axle covers the notch (1112) and another one side surface (124) of the hexagonal axle covers the trench (1113).

6. The axle securing device (100, 100A) according to claim 1, **characterized in that** the two elongated arms (112) are symmetrically disposed at the two opposite sides of the securing part (113) and the two slits (1121) are symmetrically disposed at the two opposite sides of the securing part (113).

7. The axle securing device (100, 100A) according to claim 1, **characterized in that** the securing part (113) further has two second securing holes (1132) respectively located at the two opposite ends of the securing part (113) to which the two elongated arms (112) connected, and the first securing hole (1131) is located between the polygonal hole (1111) and the two second securing holes (1132), wherein the axle securing device (100, 100A) further comprises two second bolts (150), and the two second bolts (150) are respectively inserted through the two second securing holes (1132).

8. An axle securing device (100B ,100C) for securing a polygonal axle (120) and a roller a secured thereto, **characterized by** comprising:
a bracket (110b) comprising a clamping part (11 1b), an elongated arm (112b) and a securing part (1 13b), wherein the elongated arm (112b) is connected to one end of the clamping part (111b) and the securing part (113b) is connected to another end of the clamping part (111b), the clamping part (111b) has a polygonal hole (1111) and the securing part (113b) has a first securing hole (1131), wherein the elongated arm (112b) is spaced apart from the securing part (113b) and a slit (1122) is provided between the elongated arm (112b) and the securing part (113b), the slit (1122) is connected to the polygonal hole (1111), wherein the polygonal axle (120) is inserted through the polygonal hole (1111) and clamped by the clamping part (111b);
an elastic buckle (130) attached to the elongated arm (112b) and the securing part (113b), wherein the elastic buckle (130) comprises a mounting part (131) having a mounting hole (1311) aligned with the first securing hole (1131) and two elastic arms (132) respectively connected to two opposite sides of the mounting part (131), the two elastic arms (132) respectively contact the elongated arm (112b) and the securing part (113b), wherein the elongated arm (112b) and the securing part (113b) are held between the two elastic arms (132) and the two elastic arms (132) respectively apply clamping forces (F) towards the first securing hole (1131) to the elongated arm (112b) and the securing part (113b), the clamping part (111) is driven by the elongated arm (112b) and the securing part (113b) to constrict inwardly and thus restricting a movement of the polygonal axle (120); and
a first bolt (140) inserted through the mounting hole (1311) and the first securing hole (1131) to secure the elastic buckle (130) on the bracket (110b).

9. The axle securing device (100B) according to claim 8, **characterized in that** the polygonal hole (1111) is a hexagonal hole and the polygonal axle (120) is a hexagonal axle.

10. The axle securing device (100B, 100C) according to claim 9, **characterized in that** the clamping part (111b) has a notch (1112) connected to the hexagonal hole and a trench (1113) opposite to the notch (1112), and the hexagonal hole is connected to the slit (1122) through the trench (1113).

11. The axle securing device (100B) according to claim 10, **characterized in that** one corner (121) of the hexagonal axle is inserted into the notch (1112) and another one corner (122) of the hexagonal axle is inserted into the trench (1113).

12. The axle securing device (100C) according to claim 10, **characterized in that** one side surface (123) of the hexagonal axle covers the notch (1112) and another one side surface (124) of the hexagonal axle covers the trench (1113).

13. The axle securing device (100B, 100C) according to claim 8, **characterized in that** the elongated arm (112b) has one end (112b 1) connected to the clamping part (111b) and another end spaced apart from the securing part (113b), and an aperture (1123) is formed between the another end (112b2) of the elongated arm (112b) and the securing part (113b).

14. The axle securing device (100B, 100C) according to claim 8, **characterized in that** the securing part (113b) further has two second securing holes (1132) distal from the polygonal hole (1111) and the first securing hole (1131) is located between the polygonal hole (1111) and the two second securing holes (1132), wherein the axle securing device (100B, 100C) further comprises two second bolts (150), and the two second bolts (150) are respectively inserted through the two second securing holes (1132).
